# EUROPÄISCHE PATENTSCHRIFT

(11) **EP 0 786 176 B1**
(45) Veröffentlichungstag und Bekanntmachung des Hinweises auf die Patenterteilung: **28.08.2002**
(21) Anmeldenummer: 95933323.8
(22) Anmeldetag: 09.10.1995
(51) Int. Cl.: H04B 10/24, H04B 10/207, H04B 7/22

(54) **HYBRIDES LICHTWELLENLEITER- UND KOAXIALLEITUNGS- TEILNEHMERANSCHLUSSNETZ**
HYBRID OPTICAL WAVEGUIDE AND COAXIAL CABLE SUBSCRIBER CONNECTION NETWORK
RESEAU DE RACCORDEMENT D'ABONNES HYBRIDE A FIBRES OPTIQUES ET A CABLE COAXIAL

(30) Priorität: 14.10.1994 DE 4436818
(43) Veröffentlichungstag der Anmeldung: 30.07.1997
(73) Patentinhaber: SIEMENS AKTIENGESELLSCHAFT, 80333 München (DE)
(72) Erfinder: MÖHRMANN, Karl, Heinz, D-81369 München (DE)
(86) Internationale Anmeldenummer: DE9501379
(87) Internationale Veröffentlichungsnummer: WO96012359

(56) Entgegenhaltungen:
- DE-A- 3 836 224
- FR-A- 2 558 674
- LASER FOCUS WORLD, Bd. 26, Nr. 2, 1.Februar 1990 Seiten 129/130, 132-137, XP 000100667 'AM SYSTEMS BRING FIBER TO CABLE TELEVISION'
- PROCEEDINGS OF THE GLOBAL TELECOMMUNICATIONS CONFERENCE (GLOBECOM), HOUSTON, NOV. 29 - DEC. 2, 1993, Bd. 1 OF 4, 29.November 1993 INSTITUTE OF ELECTRICAL AND ELECTRONICS ENGINEERS, Seiten 239-243, XP 000428061 CHAPURAN T E ET AL 'FIBER-IN-THE-LOOP VIDEO UPGRADES WITH BOTH ANALOG AND DIGITAL TRANSMISSION OVER FIBER AND COAXIAL CABLE'

## Beschreibung

Neuere Entwicklungen der Fernmeldetechnik führen in der Ebene der Teilnehmeranschlußleitungen zu passiven optischen Telekommunikationssystemen, in denen jeweils eine Mehrzahl von dezentralen Einrichtungen (Teilnehmerstellen oder jeweils eine Mehrzahl von Teilnehmerstellen zusammenfassende sog. Distant Units) jeweils über eine eigene Lichtwellenleiter-Anschlußleitung mit einem optischen Verzweiger verbunden ist, der direkt oder über wenigstens einen weiteren optischen Verzweiger mit einem gemeinsamen Lichtwellenleiteranschluß einer - insbesondere durch eine Vermittlungsstelle gegebenen - zentralen Einrichtung über einen Lichtwellenleiter-Bus verbunden ist (EP-A-0 171 080; ISSLS '88, Conf. Papers 9.4.1...5; BR Telecom Technol. J. 17(1989)2, 100...113).

In einem solchen passiven optischen Telekommunikationsnetz kann die Signalübertragung von der zentralen Einrichtung aus "downstream" zu den dezentralen Einrichtungen hin in einem TDM-Zellenstrom vor sich gehen, aus dem jede dezentrale Einrichtung nur die für ebendiese dezentrale Einrichtung bestimmten Zellen aufnimmt, und die Signalübertragung von den dezentralen Einrichtungen aus "upstream" zur zentralen Einrichtung hin kann in einem TDMA-Verfahren vor sich gehen, demzufolge eine dezentrale Einrichtung einen jeden Burst mit Hilfe einer von der zentralen Einrichtung her einrichtungsindividuell eingestellten Verzögerungseinrichtung synchronisiert aussendet (EP-A-0 460 398).

Die Einführung neuer Breitbandkommunikationsdienste hängt ganz allgemein ab von Art und Umfang der bereits vorhandenen Fernmeldeinfrastrukturen mit den darin bereitgestellten Telekommunikationsdiensten und von der Nachfrage nach Breitbandtelekommunikationsmöglichkeiten. Dabei wird im Bereich der Privathaushalte das potentiell grösste Anschlußvolumen gesehen; dieses Anschlußpotential konkretisiert sich indessen zu einer effektiven Anschlußnachfrage nicht ohne ensprechend niedrige Kosten eines Breitband-Teilnehmeranschlusses.

Um einem Teilnehmer die Nutzung von Breitband-ISDN-Diensten (genannt werden z.B. interaktiver Videoabruf Video on Demand (VoD), Teleshopping, Informationsrecherche, aber auch Schmalbanddienste wie (N-)ISDN oder herkömmliche Telefonie (POTS)) zu ermöglichen, werden z.Zt. verschiedene Anschlußmöglichkeiten diskutiert. Besonders attraktiv sind Lösungen, bei denen bereits vorhandene Infrastruktur verwendet werden kann. Ein entsprechendes Medium stellen z.B. die Koaxialkabelnetze der CATV-Anbieter dar: In bestehenden koaxialen CATV-Netzen ist eine zusätzliche Übertragung von Signalen interaktiver Dienste grundsätzlich in der Form möglich, daß die zusätzlichen Signale im Kabel in spektralen Bereichen übertragen werden, welche nicht bereits mit TV- bzw. UKW-Rundfunk-Signalen belegt sind. Vielerorts wird für die Übertragung der analogen TV- und UKW-Ton-Signale beispielsweise ein Bereich zwischen 47 MHz und 450 MHz benutzt, so in Deutschland die Bereiche I bis III und Oberer Sonderkanalbereich bis 300 MHz, ggf. zusätzlich Hyperband / Erweiterter Sonderkanalbereich zwischen 300 und 450 MHz; in vielen anderen Ländern ist die Frequenzbelegung ähnlich. Es gibt keinen einheitlichen Standard. In manchen Ländern sind oder werden derzeit bereits breiterbandige Verteilnetze eingerichtet.
Für die Übertragung der Signale zusätzlicher interaktiver Dienste sind dann mehrere Möglichkeiten gegeben. So könnte beispielsweise die Signalübertragung in Abwärtsrichtung zum Teilnehmer hin oberhalb des CATV-Bereiches, die Signalübertragung aufwärts vom Teilnehmer weg unterhalb des CATV-Bereiches (beispielsweise im Bereich zwischen 5 und 47 MHz) vor sich gehen. Da eine universelle Aufwertung solcher Netze bis hin zu interaktiven Breitbanddiensten für eine größere Zahl angeschlossener Teilnehmer die Übertragung erheblicher Datenraten in beiden Richtungen erfordert (beispielsweise mehrere 100 Mbit/s abwärts, 155 Mbit/s aufwärts pro koaxialem Teilnetz), gibt es Vorschläge, beide Übertragungsrichtungen im spektralen Bereich oberhalb 450 MHz zu implementieren, beispielsweise die Abwärtsübertragung zwischen 450 und 750 MHz, die Aufwärtsübertragung zwischen 750 MHz und 1 GHz.
Die Nutzung kann dabei entsprechend dem in vorhandenen CATV-Systemen festgelegten Kanalraster erfolgen (in Deutschland 7 MHz bzw. im UHF-Bereich 8 MHz; in USA beispielsweise 6 MHz) oder in breiteren Frequenzbändern.
In den USA wird von einigen Cable-TV-Gesellschaften ein Teilbereich des bislang freien Bereichs für sog. Cablephone verwendet. Andere Betreiber denken an ein umfassenderes System, das einen Großteil der oben genannten Dienste im Rahmen eines Access-Networks z.B. auf ATM-Basis bietet, wobei in der Regel den koaxialen Teilnetzen wegen der begrenzten Reichweite eine optische Zubringerleitung (Fiber Feeder) vorgeschaltet sein kann (TELEPHONY, 01.11.93, 48 ... 53).

Man hat auch schon neben einem passiven optischen Netz (PON) mit Erweiterung durch ein Koaxialleitungs-Baumnetz für unidirektionale Verteilkommunikation (TV) ein weiteres passives optisches Netz (PON) für bidirektionale interaktive vermittelte Telekommunikation eingesetzt (Der Fernmeldeingenieur 46(1992)10, Bild 11.2 - System OPAL 4).

Ein Teilnehmeranschlußnetz mit jeweils einer Mehrzahl von teilnehmerseitigen Netzabschlußeinheiten gemeinsamen Koaxialleitungs-Baumnetzen und diese Koaxialleitungs-Baumnetze mit Verbindungseinrichtungen verbindenden Lichtwellenleitern kann auch in der Weise ausgebildet sein, daß die Koaxialleitungs-Baumnetze jeweils über eine Konvertereinrichtung an ein optische Verzweiger enthaltendes Lichtwellenleiter-Baumnetz für sowohl bidirektionale Telekommunikationsdienste, vorzugsweise im Wellenlängengetrenntlagebetrieb, als auch unidirektionale Verteilkommunikationsdienste angeschlossen sind (DE 4406509).

Generell erscheint eine Nutzung des koaxialen Kabels als Übertragungsmedium bis zu einer Frequenz von ca. 1 GHz als möglich, wie dies für analoge TV-Verteilung in USA bereits praktisch erprobt wurde; auch in Deutschland steht die Technik für die analoge Abwärts-Übertragung bis 862 MHz bereits bereit.
Die an sich wünschenswerte Nutzung dieses Frequenzbereichs ist indessen auch mit einigen Problemen behaftet:
Die spektrale Ausnutzung des Frequenzbereiches kann in Abwärtsrichtung (zum Teilnehmer hin) durch Wahl komplexer Modulationsverfahren (z.B. Vielstufen-QAM), ggf. mit adaptiven Entzerrern, sehr hoch getrieben werden (beispielsweise auf 4 Bit/s/Hz). Für eine Übertragung in Aufwärtsrichtung (vom Teilnehmer weg) eignen sich derartige Koaxialnetze aufgrund ihrer Baum- und Abzweigstruktur (Punkt-zu-Multipunkt-System) indessen nur bedingt. Um ein unzulässiges Interferieren der Signale mehrerer Teilnehmer in der gemeinsamen Kopfstelle für die interaktiven Signale zu vermeiden, müssen geeignete Multiplex- und Modulationsverfahren eingesetzt werden; die spektrale Effizienz hängt stark vom gewählten Übertragungsverfahren ab: Wird jedem Teilnehmer ein Frequenzkanal fest zugeteilt (FDM), so kann die Ausnutzung in diesem Kanal sehr hoch getrieben werden. Das Verfahren ist aber sehr inflexibel und erlaubt insbesondere nicht eine leichte Änderung der teilnehmerbezogenen Übertragungs-Bitrate. Prinzipiell flexiblere Übertragungsverfahren wie CDMA und TDMA erlauben dagegen bei vertretbarem technischem Aufwand nur eine geringere spektrale Effizienz. Die Dämpfung eines Koaxialkabels steigt mit der Wurzel aus der Frequenz. Daher sind entzerrende Verstärker erforderlich, welche diesen Dämpfungsgang und den damit verbundenen Phasengang ausgleichen. Diese Verstärker werden um so aufwendiger, je breiter das zu verarbeitende Spektrum ist; bei Ausnutzung des Koaxialnetzes auch durch interaktive Dienste sind Zweiwegverstärker vorzusehen, welche in den für die beiden Übertragungsrichtungen gewählten Frequenzbereichen in unterschiedlichen Richtungen arbeiten.

Der Netzbetreiber ist indessen daran interessiert, für die Einrichtung zusätzlicher neuer Dienste möglichst geringe zusätzliche Investitionen in seinem Netz tätigen zu müssen, und die Erfindung zeigt nun einen Weg zu einer vorteilhaften Gestaltung eines Teilnehmeranschlußnetzes, welche dieser Forderung weitgehend entgegenkommt.

Die Erfindung betrifft ein bidirektional betreibbares Teilnehmeranschlußnetz mit einem oder mehreren jeweils einer Mehrzahl von teilnehmerseitigen Netzabschlußeinheiten gemeinsamen, mit Verstärkern versehenen aktiven CATV-Koaxialleiter-Baumnetz(en), in das (die) von einer CATV-Kopfstelle her TV-Verteilsignale eingespeist werden; dieses Teilnehmeranschlußnetz ist erfindungsgemäß dadurch gekennzeichnet, daß diese(s) Koaxialleitungs-Baumnetz(e) zur Übertragung von Digitalsignalen bidirektionaler interaktiver Telekommunikationsdienste in der Weise durch ein von einer übergeordneten Verbindungseinrichtung ausgehendes bzw. dorthin führendes Lichtwellenleiternetz ergänzt ist, daß die Lichtwellenleiter jeweils hinter dem teilnehmemächsten Koaxialleitungs-Verstärker mit den von hier zu den Teilnehmern führenden Zweigen des Koaxialleiternetzes bidirektional verbunden sind.

Die Erfindung ermöglicht mit einer nur minimalen Veränderung eines vorhandenen Koaxialleitungsnetzes eine sehr wirtschaftliche Versorgung einer großen Anzahl von Teilnehmern sowohl mit Verteilkommunikationsdiensten als auch mit interaktiven vermittelten Telekommunikationsdiensten.
Das bestehende koaxiale TV-Verteilnetz wird für die Verteilung der analogen TV-Signale weiterverwendet. Zusätzliche Glasfaser-Feeder brauchen für die analogen Signale nicht vorgesehen zu werden, sofern optische Übertragung nicht aus anderen Gründen eingesetzt wird, z.B. zur Erhöhung der Wirtschaftlichkeit in höheren Netzebenen.

Das optische Overlay-Netz wird nur für die digitalen Signale installiert. Dieses optische Netz erlaubt den Transport der Signale an die / von der Stelle des letzten aktiven Verstärkers in Teilnehmernähe (C-Verstärker). Da die digitalen Signale erheblich unempfindlicher gegen Rauschen und Nichtlinearitäten sind als die analogen TV-Signale, sind die notwendigen elektrooptischen und optoelektrischen Wandler kostengünstig realisierbar.
Damit ist nur eine minimale Veränderung des vorhandenen Koax-Netzes erforderlich. Das optische Overlaynetz für die digitalen Signale der zusätzlichen interaktiven Dienste kann sehr effizient beispielsweise unter Verwendung von optischem Wellenlängenmultiplex zur Richtungstrennung auf einer Faser realisiert werden.
Die beschriebene Netzstruktur erlaubt zudem eine vergrößerte Flexibilität, da sich die Kopfstelle für die analogen CATV-Signale, welche über das ganze koaxiale Netz hinweg übertragen werden, und die Kopfstelle für die digitalen interaktiven Signale, welche optisch zu den teilnehmernächsten Verstärkern übertragen werden, nun an unterschiedlichen Orten befinden können.

In weiterer Ausgestaltung der Erfindung können die Koaxialleitungs-Zweige am Ort des jeweiligen Koaxialleitungs-Verstärkers jeweils mit einer passiven Ein-/Auskopplungseinrichtung vorzugsweise in Form einer frequenzselektiven Weichenschaltung versehen sein, und die Lichtwellenleiter können am Ort des jeweiligen Koaxialleitungs-Verstärkers jeweils mit einer Signalumsetzereinrichtung zur optoelektrischen Wandlung der zu den Teilnehmern hin übertragenen Downstream-Signale bzw. zur elektrooptischen Wandlung der von den Teilnehmern her übertragenen Upstream-Signale abgeschlossen sein, die auf der anderen Seite mit den am Ort des jeweiligen Koaxialleitungs-Verstärkers vorgesehenen Ein-/Auskopplungseinrichtungen verbunden ist; dabei kann mit der Signalumsetzung auch eine Modulation bzw. Demodulation der elektrischen Downstream- bzw. Upstream-Signale und/oder deren Frequenzumsetzung verbunden sein.

Eine besonders günstige Lösung ergibt sich, wenn die zusätzlichen digitalen Signale im koaxialen Netz von / zu den Teilnehmern nicht im CATV-Kanalraster (6, 7 oder 8 MHz Kanalbreite) übertragen werden, sondern als Zeitmultiplexsignal in einem breiteren Frequenzband, da dann nur ein relativ geringer Modulations-/Demodulations- und Filteraufwand erforderlich ist.

Die bidirektionalen bzw. interaktiven Telekommunikationsdienste können in weiterer Ausgestaltung der Erfindung mittels in Form von ATM-Signalen übertragener Digitalsignale durchgeführt werden. Der Einsatz des ATM-Formats für die digitalen Signale ermöglicht eine sehr flexible Mischung der Signale unterschiedlicher Dienste.

Weitere Besonderheiten der Erfindung werden aus der nachfolgenden Erläuterung eines Ausführungsbeispiels für ein Telekommunikationssystem gemäß der Erfindung anhand der Zeichnungen ersichtlich.

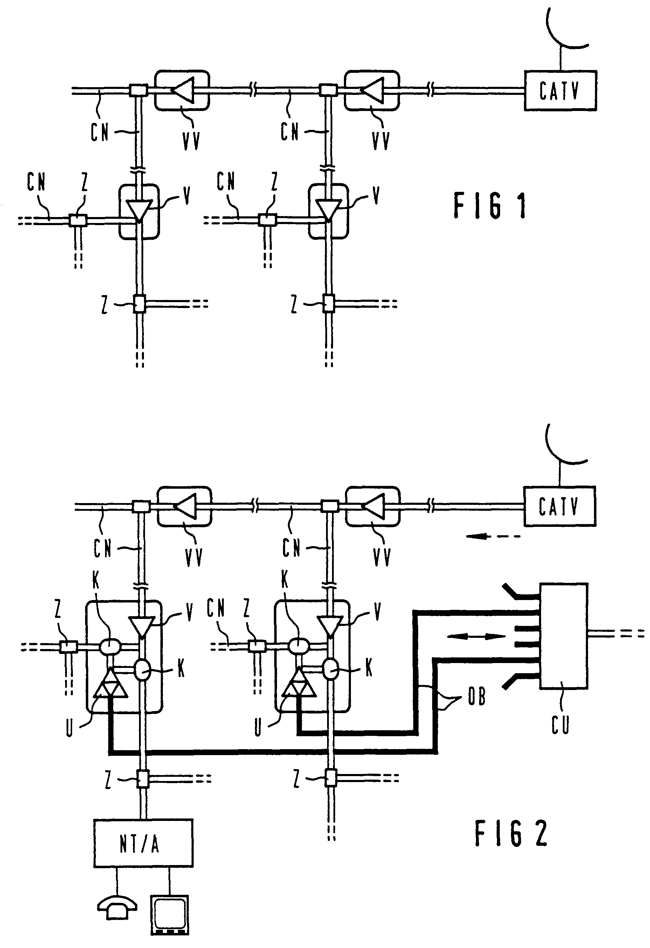

In der Zeichnung FIG 1 ist schematisch ein Ausschnitt eines konventionellen, aktiven Koaxialleiter-Baumnetzes CN mit Verstärkern VV, V und Verzweigungen Z dargestellt, in das von einer Kopfstelle (CATV Headend) her TV-Verteilsignale eingespeist werden. Derartige Koaxialleiter-Baumnetze sind bereits vielfach verlegt und bedürfen hier keiner weiteren Erläuterungen.
Ein solches Koaxialleiter-Baumnetz wird nun zu einem bidirektional betreibbaren Teilnehmeranschlußnetz erweitert:

In der Zeichnung FIG 2 ist schematisch und wiederum ausschnittsweise ein Ausführungsbeispiel eines Koaxialleiter-Baumnetzes dargestellt, das zur Übertragung von Digitalsignalen bidirektionaler interaktiver Telekommunikationsdienste durch ein von einer übergeordneten Verbindungseinrichtung (Connection Unit) CU ausgehendes bzw. dorthin führendes Lichtwellenleiternetz OB in der Weise ergänzt ist, daß die Lichtwellenleiter OB jeweils hinter dem teilnehmernächsten Koaxialleitungs-Verstärker V mit den von hier zu den Teilnehmern NT/A führenden Zweigen des Koaxialleitungsnetzes CN bidirektional verbunden sind. Teilnehmerseitig sind die Koaxialleiter jeweils mit einer Netzabschlußeinrichtung NT/A abgeschlossen, welche die Empfangs- und Sendesignale jeweils derart konvertieren möge, daß der Anschluß gängiger Endgeräte möglich ist; eine Netzabschlußeinrichtung NT/A weist z.B. Anschlüsse für Verteilfernsehen bzw. Video on Demand, für herkömmliche Telefonie (POTS) u./o. Schmalband-ISDN oder auch für einen beliebigen Breitband-ISDN-Dienst auf. In FIG 2 ist dazu angedeutet, daß an die Netzabschlußeinrichtung NT/A jeweils ein Fernsehempfänger und ein Telefon angeschlossen ist; der Anschluß weiterer Endgeräte ist möglich, ohne daß dies in der Zeichnung noch dargestellt werden müsste.

Am Ort des jeweils teilnehmernächsten Koaxialleitungs-Verstärkers V sind die Koaxialleitungs-Zweige CN jeweils mit einer passiven Ein-/Auskopplungseinrichtung K versehen; diese Ein-/Auskopplungseinrichtungen K können zweckmäßigerweise mit frequenzselektiven Weichen gebildet sein. Die Lichtwellenleiter OB sind am Ort des jeweiligen Koaxialleitungs-Verstärkers V jeweils mit einer Signalumsetzereinrichtung U zur optoelektrischen Wandlung der zu den Teilnehmern (NT/A) hin übertragenen Downstream-Signale bzw. zur elektrooptischen Wandlung der von den Teilnehmern (NT/A) her übertragenen Upstream-Signale abgeschlossen, wobei zweckmäßigerweise mit der Signalumsetzung auch eine Modulation bzw. Demodulation der elektrischen Downstream- bzw. Upstream-Signale und/oder deren Frequenzumsetzung verbunden ist. Auf der anderen Seite sind die Signalumsetzereinrichtungen U mit den am Ort des jeweiligen Koaxialleitungs-Verstärkers V vorgesehenen Ein-/Auskopplungseinrichtungen K verbunden.

In dem in FIG 2 skizzierten System werden wiederum analoge TV-Verteilsignale von einer Kopfstelle (CATV Headend) her in das Koaxialleiter-Baumnetz CN eingespeist und zu allen angeschlossenen Teilnehmern hin übertragen. Diese Fernsehsignale können beim Teilnehmer von einem an dessen Netzabschlußeinrichtung NT/A angeschlossenen, in der Zeichnung mit TV bezeichneten Fernsehempfänger in üblicher Weise empfangen werden.

Neben den analogen TV-Signalen mögen in dem in FIG 2 skizzierten Telekommunikationssystem zu den Teilnehmern (NT/A) hin digitale Signale, insbesondere im ATM- oder auch STM-Format, von der Verbindungseinrichtung (Connection Unit) CU her übertragen werden. Solche Signale können z.B. digitale Videosignale eines (auch einen ATM-Rückkanal für die Programmwahl durch den TV-Teilnehmer einschliessenden) Video-on-Demand-Dienstes oder auch breitbandige interaktive Datensignale sein, wobei die digitalen Videosignale mittels eines entsprechenden, in der Zeichnung nicht gesondert dargestellten Zusatzgerätes (Set-Top-Box) ebenfalls vom Fernsehempfänger TV empfangen werden.
Des weiteren können in dem in FIG 2 skizzierten System in beiden Richtungen schmalbandige ATM-Sprach- und ggf. auch Datensignale übertragen werden, was in der Zeichnung durch ein an die Netzabschlußeinrichtung NT/A angeschlossenes Telefon angedeutet wird. Weitere Dienste, welche den Anschluß weiterer Endgeräte an die jeweilige Netzabschlußeinrichtung NT/A erfordern können, sind möglich, ohne daß dies in der Zeichnung noch dargestellt werden müsste.
Die digitalen Signale werden im koaxialen Netz von/zu den Teilnehmern zweckmäßigerweise nicht im CATV-Kanalraster (6, 7 oder 8 MHz Kanalbreite) übertragen, sondern als Zeitmultiplexsignal in einem breiteren Frequenzband, da dann nur ein relativ geringer Modulations-/Demodulations- und Filteraufwand erforderlich ist.

## Patentansprüche

1. Bidirektional betreibbares Teilnehmeranschlußnetz mit einem oder mehreren jeweils einer Mehrzahl von teilnehmerseitigen Netzabschlußeinheiten (NT/A) gemeinsamen, mit Verstärkern versehenen aktiven CATV-Koaxialleitungs-Baumnetz (en) (CN), in das (die) von einer CATV-Kopfstelle her TV-Verteilsignale eingespeist werden,
**dadurch gekennzeichnet,**
**daß** diese(s) Koaxialleitungs-Baumnetz(e) (CN) zur Übertragung von Digitalsignalen bidirektionaler interaktiver Telekommunikationsdienste in der Weise durch ein von einer übergeordneten Verbindungseinrichtung (CU) ausgehendes bzw. dorthin führendes Lichtwellenleiternetz (OB) ergänzt ist, daß die Lichtwellenleiter (OB) jeweils hinter dem teilnehmernächsten Koaxialleitungs-Verstärker (V) mit den von hier zu den Teilnehmern (NT/A) führenden Zweigen des Koaxialleitungsnetzes (CN) bidirektional verbunden sind.

2. Teilnehmeranschlußnetz nach Anspruch 1,
**dadurch gekennzeichnet,**
**daß** die Koaxialleitungs-Zweige (CN) am Ort des jeweiligen Koaxialleitungs-Verstärkers (V) jeweils mit einer passiven Ein-/Auskopplungseinrichtung (K) versehen sind und
**daß** die Lichtwellenleiter (OB) am Ort des jeweiligen Koaxialleitungs-Verstärkers (V) jeweils mit einer Signalumsetzereinrichtung (U) zur optoelektrischen Wandlung der zu den Teilnehmern (NT/A) hin übertragenen Downstream-Signale bzw. zur elektrooptischen Wandlung der von den Teilnehmern (NT/A) her übertragenen Upstream-Signale abgeschlossen sind, die auf der anderen Seite mit den am Ort des jeweiligen Koaxialleitungs-Verstärkers (V) vorgesehenen Ein-/Auskopplungseinrichtungen (K) verbunden ist.

3. Teilnehmeranschlußnetz nach Anspruch 2,
**dadurch gekennzeichnet,**
**daß** die Ein-/Auskopplungseinrichtungen (K) mit frequenzselektiven Weichen gebildet sind.

4. Teilnehmeranschlußnetz nach Anspruch 2 oder 3,
**dadurch gekennzeichnet,**
**daß** mit der Signalumsetzung auch eine Modulation bzw. Demodulation der elektrischen Downstream- bzw. Upstream-Signale und/oder deren Frequenzumsetzung verbunden ist.

5. Teilnehmeranschlußnetz nach einem der Ansprüche 1 bis 4,
**dadurch gekennzeichnet,**
**daß** die bidirektionalen Telekommunikationsdienste mittels in Form von ATM-Signalen übertragener Digitalsignale durchgeführt werden.

6. Teilnehmeranschlußnetz nach einem der Ansprüche 1 bis 4,
**dadurch gekennzeichnet,**
**daß** die bidirektionalen Telekommunikationsdienste mittels in Form von STM-Signalen übertragener Digitalsignale durchgeführt werden.

7. Teilnehmeranschlußnetz nach einem der Ansprüche 1 bis 6,
**dadurch gekennzeichnet,**
**daß** die Digitalsignale in den teilnehmerseitigen Zweigen des Koaxialleitungsnetzes (CN) als Zeitmultiplexsignale übertragen werden.

8. Teilnehmeranschlußnetz nach einem der Ansprüche 1 bis 7,
**dadurch gekennzeichnet,**
**daß** die Digitalsignale im Koaxialleitungsnetz (CN) von/zu den Teilnehmern (NT/A) als Zeitmultiplexsignal in einem im Vergleich zu einer dem CATV-Kanalraster entsprechenden Kanalbreite breiteren Frequenzband übertragen werden.

## Claims

1. Bidirectionally operable subscriber connection network having one or more active CATV coaxial line tree-network(s) (CN), which is/are common in each case to a plurality of network terminating units (NT/A) at the subscriber end and are provided with amplifiers and into which TV distribution signals are fed from a CATV head station, **characterized in that**, for the purpose of transmitting digital signals of bidirectional interactive telecommunication services, this (these) coaxial line tree-network(s) (CN) is(are) supplemented by an optical waveguide network (OB), which generates from a higher-order connection unit (CU) or leads thereto, in such a way that the optical waveguides (OB) are in each case bidirectionally connected downstream of the subscriber-adjacent coaxial line amplifier (V) to the branches of the coaxial line network (CN) which lead therefrom to the subscribers (NT/A).

2. Subscriber connection network according to Claim 1, **characterized in that** the coaxial line branches (CN) are provided in each case at the location of the respective coaxial line amplifier (V) with a passive branching/extracting device (K), and **in that** the optical waveguides (OB) are in each case terminated at the location of the respective coaxial line amplifier (V) with a signal converting device (U) for the purpose of optoelectric conversion of the downstream signals transmitted towards the subscribers (NT/A), or for the purpose of electrooptic conversion of the upstream signals transmitted from the subscribers (NT/A), which signal converting device is connected on the other side to the branching/extracting devices (K) provided at the location of the respective coaxial line amplifier (V).

3. Subscriber connection network according to Claim 2, **characterized in that** the branching/extracting devices (K) are formed by frequency-selective filters.

4. Subscriber connection network according to Claim 2 or 3, **characterized in that** modulation or demodulation of the electric downstream or upstream signals and/or of their frequency conversion is connected to the signal conversion.

5. Subscriber connection network according to one of Claims 1 to 4, **characterized in that** the bidirectional telecommunication services are carried out by means of digital signals transmitted in the form of ATM signals.

6. Subscriber connection network according to one of Claims 1 to 4, **characterized in that** the bidirectional telecommunication services are carried out by means of digital signals transmitted in the form of STM signals.

7. Subscriber connection network according to one of Claims 1 to 6, **characterized in that** the digital signals are transmitted as time-division multiplex signals in the branches of the coaxial line network (CN) at the subscriber end.

8. Subscriber connection network according to one of Claims 1 to 7, **characterized in that** the digital signals are transmitted in the coaxial line network (CN) from/to the subscribers (NT/A) as a time-division multiplex signal in a frequency band which is wider by comparison with a channel width corresponding to the CATV channel separation.

## Revendications

1. Réseau de raccordement d'abonnés exploitable de manière bidirectionnelle, avec un ou plusieurs réseau(x) arborescent(s) (CN) actif (s) à câble coaxial CATV, communs à plusieurs unités de terminaison de réseau (NT/A) côté abonnés et munis d'amplificateurs, dans lequel (lesquels) les signaux de distribution TV sont alimentés à partir d'une tête de ligne CATV,
**caractérisé en ce que**, pour la transmission des signaux numériques de services de télécommunication interactifs bidirectionnels, ce(s) réseau(x) arborescent(s)(CN) à câble coaxial est complété par un réseau de fibres optiques (OB) partant d'un système de raccordement supérieur (CU) resp. y conduisant, de manière à ce que les fibres optiques (OB) soient respectivement reliées de manière bidirectionnelle derrière l'amplificateur de câble coaxial (V) le plus proche de l'abonné avec les branches du réseau à câble coaxial (CN) partant de cet endroit et conduisant vers les abonnés (NT/A).

2. Réseau de raccordement d'abonnés selon la revendication 1, **caractérisé en ce que**, à l'emplacement de l'amplificateur de câble coaxial respectif (V), les branches du câble coaxial (CN) sont chacune munies d'un système de couplage/découplage (K) passif et **en ce que**, à l'emplacement de l'amplificateur de câble coaxial respectif (V), les fibres optiques sont chacune terminées par un système de conversion des signaux (U), pour la transformation opto-électrique des signaux downstream transmis vers les abonnés (NT/A) resp. pour la transformation électro-optique des signaux upstream transmis à partir des abonnés (NT/A), lequel est relié sur l'autre côté à des systèmes de couplage/découplage (K) prévus à l'emplacement de l'amplificateur de câble coaxial respectif (V).

3. Réseau de raccordement d'abonnés selon la revendication 2, **caractérisé en ce que** les systèmes de couplage/découplage (K) sont formés d'aiguillages sélectifs de fréquence.

4. Réseau de raccordement d'abonnés selon la revendication 2 ou 3, **caractérisé en ce qu'**une modulation resp. une démodulation des signaux électriques downstream resp. upstream et/ou leur conversion de fréquence est également associée à la conversion de signaux.

5. Réseau de raccordement d'abonnés selon l'une quelconque des revendications 1 à 4, **caractérisé en ce que** les services de télécommunication bidirectionnels sont exécutés à l'aide de signaux numériques, transmis sous forme de signaux ATM.

6. Réseau de raccordement d'abonnés selon l'une quelconque des revendications 1 à 4, **caractérisé en ce que** les services de télécommunication bidirectionnels sont exécutés à l'aide de signaux numériques transmis sous forme de signaux STM.

7. Réseau de raccordement d'abonnés selon l'une quelconque des revendications 1 à 6, **caractérisé en ce que** les signaux numériques sont transmis dans les branches côté abonnés du réseau à câble coaxial (CN), sous forme de signaux temporaires multiplex.

8. Réseau de raccordement d'abonnés selon l'une quelconque des revendications 1 à 7, **caractérisé en ce que**, dans le réseau à câble coaxial (CN), les signaux numériques sont transmis à partir de/vers les abonnés (NT/A) sous forme de signaux temporaires multiplex, dans une bande de fréquences plus large, comparativement à une bande de canal correspondant à une disposition des canaux radioélectriques CATV.
